# EUROPÄISCHE PATENTSCHRIFT

(11) **EP 1 264 745 B1**
(45) Veröffentlichungstag und Bekanntmachung des Hinweises auf die Patenterteilung: **10.08.2005**
(21) Anmeldenummer: 02013054.8
(22) Anmeldetag: 20.06.1997
(51) Int. Cl.: B60R 22/26

(54) **Vorrichtung zur Befestigung eines Sicherheitsgurtes**
Safety belt fastening arrangement
Dispositif de fixation pour ceinture de sécurité

(30) Priorität: 11.07.1996 DE 19627914
(43) Veröffentlichungstag der Anmeldung: 11.12.2002
(62) Teilanmeldung aus: 97110111.8
(73) Patentinhaber: Volkswagen Aktiengesellschaft, 38436 Wolfsburg (DE)
(72) Erfinder: Kirchhoff, Heiko, 38442 Wolfsburg (DE); Dilger, Erich, 38442 Wolfsburg (DE); Lorenz, Karl-Dieter, 38446 Wolfsburg (DE); Schweissgut, Jakob, 38542 Leiferde (DE)
(74) Vertreter: Liebl, Thomas, Dipl.-Ing.

(56) Entgegenhaltungen:
- DE-A- 2 742 668
- DE-A- 3 829 824
- FR-A- 2 471 793
- US-A- 5 064 220

## Beschreibung

Die Erfindung betrifft eine Vorrichtung zur Befestigung eines Sicherheitsgurtes gemäß dem Oberbegriff des Patentanspruchs 1.

Gattungsgemäße Vorrichtungen sind bekannt geworden aus der DE-38 29 824-A1 (B60R 22/26) und der DE-OS 27 42 668 (A62B 35/02). Beide Schriften zeigen Fahrzeugsitze, bei denen als Funktionsteil des Sicherheitsgurtes ein Gurtschloss über ein Halteteil zumindest mittelbar an dem Fahrzeugsitz befestigt ist. Bei Überschreitung einer vorgegebenen Gurtkraft werden die Rastelemente aus ihrer Ruhestellung heraus mit einer Rastschiene in Eingriff gebracht, die fahrzeugfest am Fahrzeugaufbau gehalten ist. Derartige Konzepte haben den Vorteil, dass die bei einem Rückhaltefall auftretenden Gurtkraftbelastungen direkt in den Fahrzeugaufbau eingeleitet werden und nicht vom Fahrzeugsitz selbst aufgenommen werden müssen. Dieser kann dementsprechend deutlich geringer dimensioniert ausgelegt und so insbesondere auch in Leichtbauweise erstellt werden. Als Vorteil der gattungsgemäßen Konstruktion ist weiterhin zu nennen, dass am Fahrzeugsitz befestigte Gurtschlösser stets bei einer Sitzverstellung mitbewegt werden und so jeweils die für den Rückhaltefall optimale Position zum Fahrzeuginsassen gewährleistet ist. Darüber hinaus ist bei der DE-38 29 824-A1 noch als Vorteil zu erwähnen, dass das Halteteil für das Gurtschloss stets eine vorbestimmte Winkellage einnimmt und damit für den Fahrzeuginsassen beim Einfädeln der Sicherheitsgurtlasche immer eine klare Orientierung gegeben ist.

Der Erfindung liegt die Aufgabe zugrunde, gattungsgemäße Vorrichtungen insbesondere im Hinblick auf eine Herstellbarkeit in Massenfertigung zu optimieren.

Diese Aufgabe wird gelöst mit den Merkmalen des Anspruchs 1.

Gemäß Anspruch 1 sind das Deformationsglied, eine dem Drehpunkt zugeordnete Lagerhülse und ein die Lagerhülse haltender Schwenkhebel als Vormontagesatz ausgebildet. Vorteilhaft wirkt hier das Deformationsglied für den Schwenkhebel wie ein Drehlager und ist zumindest mit diesem zusammen zu einem Vormontagesatz zusammengefasst. Dabei kann zur verliersicheren Befestigung des Deformationsgliedes dieses beispielsweise an dem Schwenkhebel selbst oder an einem dem Schwenkhebel zugeordneten Einbauteil anvulkanisiert sein.

Weitere vorteilhafte Ausgestaltungen der Erfindung sind Gegenstand der Patentansprüche 2 bis 11.

Ein besonders vorteilhaftes Ausführungsbeispiel ist in der Zeichnung dargestellt. Es zeigt
- Figur 1:: in einer Seitenansicht wesentliche Elemente der erfindungsgemäßen Vorrichtung,
- Figur 2:: eine Ansicht gemäß Schnitt II - II in Figur 1,
- Figur 3:: eine perspektivische Ansicht für ein Fahrzeugsitzgestell, an dem die erfindungsgemäße Vorrichtung befestigt ist,
- Figuren 4/5:: einen Schwenkhebel in unterschiedlichen Ansichten,
- Figuren 6/7:: ein Rastelement in unterschiedlichen Ansichten,
- Figuren 8/9:: ein elastisches Deformationsglied in unterschiedlichen Ansichten.

Gleiche Bauteile weisen in allen Figuren die gleiche Bezifferung auf.

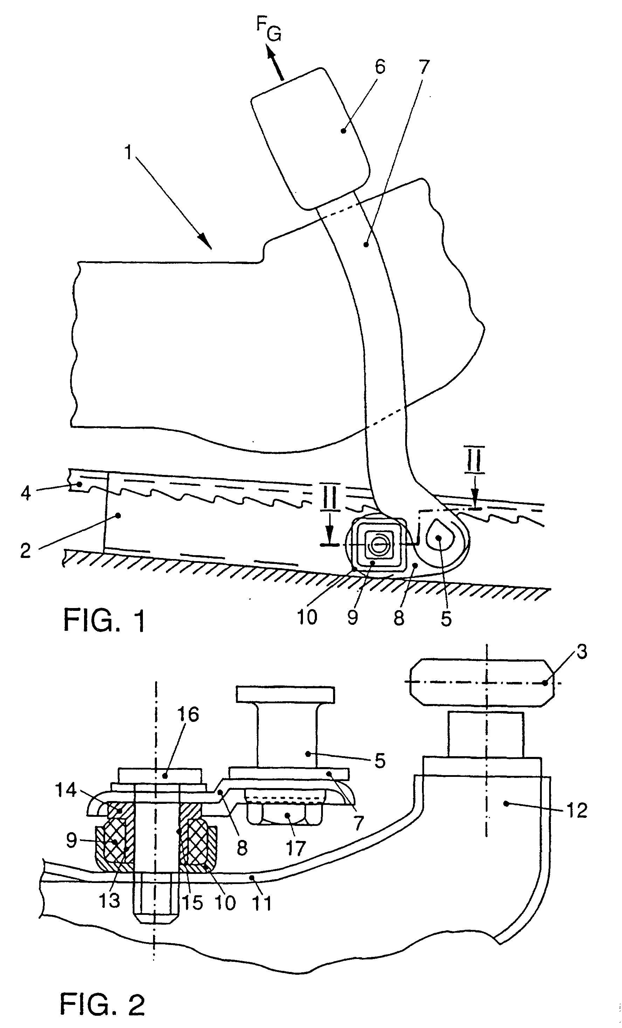

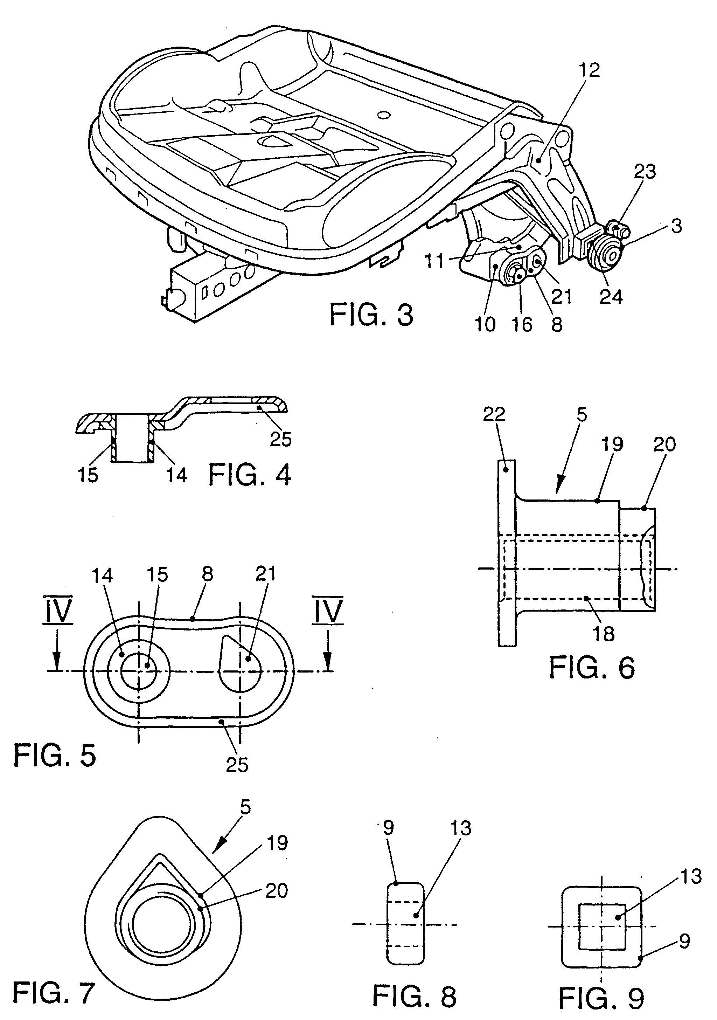

Man erkennt in Figur 1 einen ausschnittsweise dargestellten Fahrzeugsitz 1 in einer Seitenansicht. Dieser ist entlang einer Führungsschiene 2 über eine Rolle 3 (siehe Figur 3) oder mittels eines üblicherweise auch verwendeten Gleitschuhs längsverstellbar. Integraler Bestandteil der Führungsschiene 2 ist eine hier sägezahnartig ausgeführte Rastschiene 4, in welcher ein hier nockenartig ausgeführtes Rastelement 5 arretierbar ist, wenn an einem Gurtschloss 6, das auf einem Halteteil 7 befestigt ist, bei einer Vollbremsung oder während einer Unfallsituation eine vorgegebene Gurtkraft F_{G} überschritten wird. Weitere wesentliche Bestandteile der Vorrichtung sind ein Schwenkhebel 8, ein Deformationsglied 9, und eine Haltetasche 10 (siehe hierzu auch Figur 2). Letztere ist auf einem Lagerbock 11 befestigt, der einem hinteren Sitzbein 12 zugeordnet und hier als dessen integraler Bestandteil ausgeführt ist. Die hier als erstes Polygonprofil nach Art eines Vierkanttopfes ausgeführte Haltetasche ist beispielsweise durch CO₂-Schweißen oder Buckelschweißen auf dem Lagerbock 11 befestigt. Dieser Vierkanttopf nimmt das entsprechend profilierte Deformationsglied 9 (siehe hierzu auch die Figuren 8, 9) auf. In eine Innenvierkantausnehmung 13 ist als zweites Polygonprofil eine ebenfalls vierkantförmig konturierte Lagerhülse 14 eingepasst, die nach Art eines Eingriffstückes ihrerseits mit dem Schwenkhebel 8 fest verbunden ist und innenseitig eine Durchgangsbohrung 15 aufweist. Diese wird durchsetzt von einer Befestigungsschraube 16. Eine weitere Befestigungsschraube 17 ist in ein Gewinde 18 (siehe Figuren 6 und 7) des Rastelementes 5 eingedreht. Letzteres weist einen ersten Nockeneingriffsabschnitt 19, der in der Rastschiene 4 arretierbar ist, und einen demgegenüber verkleinerten zweiten Nockeingriffsabschnitt 20 auf, der formschlüssig in eine entsprechend konturierte Ausnehmung 21 des Schwenkhebels 8 (siehe hierzu Figuren 4 und 5) eingepasst ist. Ein umlaufender Halteflansch 22 (siehe Figuren 6 und 7) verhindert ein Herausdrehen aus der fahrzeugseitig angebrachten Rastschiene 2, und zwar insbesondere im Hinblick auf eine Begrenzung der Querbewegungen. Es wird auf diese Weise auch verhindert, dass das Halteteil 7 Kippbewegungen um den Schwenkhebel 8 ausführen kann.

Auch die Ansicht in Figur 3 lässt erkennen, dass das in die Ausnehmung 21 einsetzbare Rastelement 5 zwischen einem innerhalb der Haltetasche 10 liegenden Drehpunkt und einem hinteren Sitzbein 12 angeordnet ist. Das Halteteil 7 (siehe Figur 1) ist dabei so ausgeführt, dass in einem typischen Belastungsfall die Gurtkraft F_{G} so gerichtet ist, dass ihre Wirklinie im wesentlichen durch das Rastelement 5 hindurchläuft. Verbunden mit dem äußerst kurz gehaltenen Schwenkhebel 8 ergeben sich somit keinerlei Übersetzungsverluste, wenn das Rastelement 5 durch Zusammenquetschen des Deformationsgliedes 9 nach oben in Richtung der Rastschiene 4 bewegt wird. Bei einem beispielsweise aus Gummi hergestellten Deformationsglied 9 wird das Rastelement 5 aus der Rastschiene 4 wieder selbsttätig außer Eingriff gebracht, wenn die Gurtbelastung nachlässt. Es ergibt sich dann wieder eine Ruhestellung, die eine problemlose Längsverstellung des Fahrzeugsitzes 1 innerhalb der Führungsschiene 2 ermöglicht.

Bei dem in Figur 3 dargestellten Ausführungsbeispiel ist der Rolle 3 noch eine Andruckrolle 23 zugeordnet, die in einer zweiten Haltetasche 24 ebenfalls mit einem hier nicht weiter dargestellten Deformationsglied gelagert ist. Dieses weitere Deformationsglied und auch die Haltetasche 23 können gemäß einer besonders vorteilhaften Weiterbildung der Erfindung baugleich ausgeführt werden, so dass für beide Funktionen preisgünstig identische Einzelteile hergestellt werden können.

Die Lagerung des Schwenkhebels 8 mittels des elastisch ausgeführten Deformationsgliedes 9 ist hier als besonders vorteilhaft anzusehen, da mit leicht herstellbaren Kleinteilen ohne großen Montageaufwand ein Drehpunkt für das Rastelement 5 realisiert werden kann.

Im Hinblick auf die Montage von besonderer Bedeutung ist auch, dass zumindest aus dem Deformationsglied 9, der Lagerhülse 14 und dem Schwenkhebel 8 ein Vormontagesatz gebildet werden kann. Zur weiteren Vereinfachung können dem Montagesatz aber auch noch das Rastelement 5 und das Halteteil 7 samt Gurtschloss 6 zugeordnet werden. Dieser relative große Bauteileumfang wird dann komplett mittels Verschraubung an dem Lagerbock 11 bzw. Sitzbein 12 befestigt.

Vorstellbar ist als Unterzusammenbau auch eine Zusammenfassung der Elemente Haltetasche 10, Lagerhülse 14 und Deformationsglied 9. Letzteres kann beispielsweise hier vorzugsweise metallisch ausgeführte Bauteile durch direktes Anvulkanisieren fest miteinander verbinden. Über eine Befestigungsschraube 16 kann dann die Haltetasche 10 gegen den Lagerbock 11 gespannt werden. Der Schwenkhebel 8 ist dabei so an der Lagerhülse 14 befestigt, dass er ohne weiteres freigängig ist.

Zur Erzeugung einer ausreichenden Stabilität weist der Schwenkhebel 8 einen umlaufenden Halteflansch 25 auf, der in einem hier nicht weiter bezifferten Fußbereich abgerundet ist und so für das montierende Personal ohne Verletzungsgefahr handhabbar ist.

Denkbar ist auch eine Befestigung der Haltetasche 10 direkt auf dem Sitzbein 12. Im übrigen kann auch hinsichtlich der Befestigung des Rastelementes 5 eine kinematische Umkehr vorgenommen werden. Dieses ist beispielsweise in einem hier nicht gezeigten Ausführungsbeispiel am Schwenkhebel 8 befestigt und greift in eine entsprechend konturierte Ausnehmung des Halteteils 7 ein.

## Patentansprüche

1. Vorrichtung zur Befestigung eines Sicherheitsgurtes an einem längs- und/oder höhenverstellbaren Fahrzeugsitz mit
- einem Halteteil (7) zur Aufnahme eines dem Sicherheitsgurt zugeordneten Funktionsteils (6),
- einem in einer fahrzeugfesten Rastschiene (4) verrastbaren Rastelement (5), das am Fahrzeugsitz (1) zumindest mittelbar schwenkbar angelenkt und über das Halteteil (7) betätigbar ist,
- einem Deformationsglied (9), das unter Einwirkung einer am Halteteil (7) eingeleiteten Gurtkraft nachgiebig ist, und welches in einer Ruhestellung das Rastelement (5) gegenüber der Rastschiene (4) außer Eingriff hält und bei Überschreitung einer vorgegebenen Gurtkraft zur Verrastung des Rastelementes (5) in der Rastschiene (4) nachgibt,
**dadurch gekennzeichnet, dass**
das Deformationsglied (9), eine dem Drehpunkt zugeordnete Lagerhülse (14) und ein die Lagerhülse (14) haltender Schwenkhebel (8) als Vormontagesatz ausgebildet sind.

2. Vorrichtung nach Anspruch 1, **dadurch gekennzeichnet, dass** das Rastelement (5) nockenförmig ausgebildet ist.

3. Vorrichtung nach Anspruch 1 oder Anspruch 2, **dadurch gekennzeichnet, dass** das Rastelement (5) dem Halteteil (7) zugeordnet ist.

4. Vorrichtung nach wenigstens einem der Ansprüche 1 bis 3, **dadurch gekennzeichnet, dass** das Rastelement (5) dem Schwenkhebel (8) zugeordnet ist.

5. Vorrichtung nach Anspruch 4, **dadurch gekennzeichnet, dass** an dem Schwenkhebel (8) eine das Rastelement (5) formschlüssig aufnehmende Ausnehmung (21) vorgesehen ist.

6. Vorrichtung nach einem der Ansprüche 1 bis 5, **dadurch gekennzeichnet, dass** an dem Halteteil (7) eine das Rastelement (5) formschlüssig aufnehmende Ausnehmung (21) vorgesehen ist.

7. Vorrichtung nach einem der Ansprüche 2 bis 6, **dadurch gekennzeichnet, dass** an dem nockenförmigen Rastelement (5) ein erster Nockeneingriffsabschnitt (19) für die Rastschiene (4) und ein zweiter Nockeneingriffsabschnitt (20) zur Unterbringung in einer das Rastelement (5) formschlüssig aufnehmenden Ausnehmung (21) vorgesehen ist.

8. Vorrichtung nach einem der Ansprüche 2 bis 7, **dadurch gekennzeichnet, dass** das nockenförmige Rastelement (5) von einer Gewindebohrung (18) durchsetzt ist.

9. Vorrichtung nach einem der Ansprüche 2 bis 8, **dadurch gekennzeichnet, dass** an dem nockenförmigen Rastelement (5) ein umlaufender Halteflansch (22) angeformt ist, der ebenfalls eine Nockenkontur aufweist.

10. Vorrichtung nach wenigstens einem der Ansprüche 1 bis 9, **dadurch gekennzeichnet, dass** der Schwenkhebel (8) ein Blechformteil mit einem aufgestellten Rand (25) ist, der umlaufend ausgeführt und im Fußbereich gerundet ist.

11. Vorrichtung nach Anspruch 10, **dadurch gekennzeichnet, dass** zur formschlüssigen Aufnahme des Rastelementes (5) und/oder von Elementen des Drehpunkts (14) durch Stanzung erzeugt Ausnehmungen in dem Blechformteil (8) vorgesehen sind.

## Revendications

1. Dispositif de fixation pour ceinture de sécurité sur un siège de véhicule réglable en longueur et/ou en hauteur, comprenant :
- une partie de retenue (7) destinée à recevoir une partie fonctionnelle (6) associée à la ceinture de sécurité,
- un élément d'encliquetage (5) pouvant s'encliqueter dans un rail d'encliquetage (4) fixé au véhicule, qui est articulé de manière pivotante au moins de façon indirecte au siège du véhicule (1) et qui peut être actionné par la partie de retenue (7),
- un organe de déformation (9) qui peut fléchir sous l'effet d'une force de ceinture introduite au niveau de la partie de retenue (7) et qui maintient hors d'engagement l'élément d'encliquetage (5) par rapport au rail d'encliquetage (4) dans une position de repos et en cas de dépassement d'une force de ceinture prédéfinie cède pour permettre l'encliquetage de l'élément d'encliquetage (5) dans le rail d'encliquetage (4),
**caractérisé en ce que**
l'organe de déformation (9), une douille-palier (14) associée au pivot et un levier pivotant (8) retenant la douille-palier (14) sont réalisés sous forme d'ensemble de prémontage.

2. Dispositif selon la revendication 1, **caractérisé en ce que** l'élément d'encliquetage (5) est réalisé en forme de came.

3. Dispositif selon la revendication 1 ou la revendication 2, **caractérisé en ce que** l'élément d'encliquetage (5) est associé à la partie de retenue (7).

4. Dispositif selon au moins l'une quelconque des revendications 1 à 3, **caractérisé en ce que** l'élément d'encliquetage (5) est associé au levier pivotant (8).

5. Dispositif selon la revendication 4, **caractérisé en ce qu'**un évidement (21) recevant par engagement positif l'élément d'encliquetage (5) est prévu sur le levier pivotant (8).

6. Dispositif selon l'une quelconque des revendications 1 à 5, **caractérisé en ce qu'**un évidement (21) recevant par engagement positif l'élément d'encliquetage (5) est prévu sur la partie de retenue (7).

7. Dispositif selon l'une quelconque des revendications 2 à 6, **caractérisé en ce qu'**il est prévu sur l'élément d'encliquetage (5) en Forme de came un premier segment d'engagement de came (19) pour le rail d'encliquetage (4) et un deuxième segment d'engagement de came (20) pour le montage dans un évidement (21) recevant par engagement positif l'élément d'encliquetage (5).

8. dispositif selon l'une quelconque des revendications 2 à 7, **caractérisé en ce que** l'élément d'encliquetage (5) en forme de came est traversé par un alésage fileté (18).

9. Dispositif selon l'une quelconque des revendications 2 à 8, **caractérisé en ce qu'**une bride de retenue périphérique (22) est formée sur l'élément d'encliquetage (5) en forme de came et présente également un contour en forme de came.

10. Dispositif selon au moins l'une quelconque des revendications 1 à 9, **caractérisé en ce que** le levier pivotant (8) est une pièce moulée en tôle avec un bord posé (25) qui est réalisé avec une forme périphérique et qui est arrondi dans la région de sa base.

11. Dispositif selon la revendication 10, **caractérisé en ce que** pour la réception par engagement positif de l'élément d'encliquetage (5) et/ou d'éléments du pivot (14), on prévoit des évidements formés par poinçonnage dans la pièce moulée en tôle (8).

## Claims

1. Device for fastening a safety belt on a longitudinally adjustable and/or height-adjustable vehicle seat, having
- a retaining part (7) for receiving a functional part (6) assigned to the safety belt,
- a latching element (5) which can be latched in a latching rail (4), which is fixed to the vehicle, is articulated pivotably at least indirectly on the vehicle seat (1) and can be actuated via the retaining part (7),
- a deformation element (9) which is compliant under the action of a belt force introduced into the retaining part (7), which, in a rest position, keeps the latching element (5) out of engagement with the latching rail (4) and which, when a predetermined belt force is exceeded, yields in order for the latching element (5) to latch in the latching rail (4),
**characterized in that** the deformation element (9), a bearing sleeve (14) assigned to the pivot point, and a pivot lever (8) retaining the bearing sleeve (14) are designed as a preassembly set.

2. Device according to Claim 1, **characterized in that** the latching element (5) is designed in the form of a cam.

3. Device according to Claim 1 or Claim 2, **characterized in that** the latching element (5) is assigned to the retaining part (7).

4. Device according to at least one of Claims 1 to 3, **characterized in that** the latching element (5) is assigned to the pivot lever (8).

5. Device according to Claim 4, **characterized in that** a recess (21) which receives the latching element (5) in a positively locking manner is provided on the pivot lever (8).

6. Device according to one of Claims 1 to 5, **characterized in that** a recess (21) which receives the latching element (5) in a positively locking manner is provided on the retaining part (7).

7. Device according to one of Claims 2 to 6, **characterized in that** there are provided on the cam-like latching element (5) a first cam engagement section (19) for the latching rail (4) and a second cam engagement section (20) for accommodating a recess (21), which receives the latching element (5) in a positively locking manner.

8. Device according to one of Claims 2 to 7, **characterized in that** a threaded bore (18) passes through the cam-like latching element (5).

9. Device according to one of Claims 2 to 8, **characterized in that** there is integrally formed on the cam-like latching element (5) a peripheral retaining flange (22), which likewise has a cam contour.

10. Device according to at least one of Claims 1 to 9, **characterized in that** the pivot lever (8) is a shaped sheet-metal part with an upright border (25) which runs around the periphery and is rounded in the bottom region.

11. Device according to Claim 10, **characterized in that** recesses produced by punching are provided in the shaped sheet-metal part (8) in order to receive the latching element (5) and/or elements of the pivot point (14) in a positively locking manner.
